# FASCICULE DE BREVET EUROPEEN

(11) **EP 0 511 106 B1**
(45) Date de publication et mention de la délivrance du brevet: **04.01.1995**
(21) Numéro de dépôt: 92401162.0
(22) Date de dépôt: 23.04.1992
(51) Int. Cl.: G01P 3/44

(54) **Roulement perfectionné intégrant un capteur de vitesse**
Verbessertes Walzenlager mit integriertem Geschwindigkeitsmessaufnehmer
Improved rollbearing with incorporated speed sensor

(30) Priorité: 24.04.1991 FR 9105058
(43) Date de publication de la demande: 28.10.1992
(73) Titulaire: JAEGER, F-92303 Levallois-Perret (FR)
(72) Inventeur: Hennequin, Yves, F-78210 St Cyr l'Ecole (FR)
(74) Mandataire: Schrimpf, Robert

(56) Documents cités:
- EP-A- 0 053 894
- EP-A- 0 376 771
- DE-A- 3 523 374

## Description

La présente invention concerne le domaine des roulements intégrant des capteurs de vitesse.

On a proposé depuis plusieurs années d'intégrer des capteurs tachymétriques dans des roulements. De tels dispositifs sont décrits par exemple dans les documents FR-A-2629155, FR-A-2558223, FR-A-2625777, US-A-4688951, US-A-4778286 et US-A-4783180. Une capteur comprenant les caractéristiques de la première partie de la revendication 1 est décrit par exemple dans EP-A-376 771.

De tels dispositifs combinant roulement et capteur tachymétrique peuvent être utilisés dans tout système comprenant deux pièces en rotation relative, pour contrôler le mouvement relatif de celles-ci.

La présente invention vise tout particulièrement le domaine des véhicules automobiles et plus précisément les roulements de roues intégrant des capteurs tachymétriques pour piloter les moyens de commande de freinage antipatinage ou antiblocage généralement dénommés "ABS". La présente invention n'est cependant pas limitée à cette utilisation particulière et peut trouver application dans le contrôle de tout système comprenant deux pièces susceptibles de rotation relative.

Les dispositifs combinant roulement et capteur tachymétrique, jusqu'ici proposés, ne donnent pas totalement satisfaction.

Le but principal de la présente invention est de proposer un nouveau roulement intégrant un capteur de vitesse qui autorise le phénomène dit de reptation, tout en étant de montage simple. Le phénomène de reptation sera explicité par la suite.

Ce but est atteint selon la présente invention, grâce à un roulement comprenant de façon connue en soi un support annulaire de capteur, une cage externe, une cage interne, et des corps de roulement répartis entre la cage externe et la cage interne, l'une de ces cages étant conçue pour être fixée sur un chassis, caractérisé par le fait que le support annulaire de capteur comporte une bague destinée à être pincée entre la cage fixe du roulement et le chassis associé, cette bague présentant un coefficient de frottement plus élevé sur sa face dirigée vers le chassis que sur sa face dirigée vers la cage fixe de roulement.

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 représente une vue schématique partielle en coupe axiale longitudinale d'un roulement conforme à un premier mode de réalisation de la présente invention, et
- la figure 2 représente une vue similaire d'un roulement conforme à un second mode de réalisation de la présente invention.

On aperçoit sur les figures annexées des roulements conformes à la présente invention comprenant essentiellement :
- une cage externe 100,
- une cage interne 120,
- des corps de roulement 150 placés entre la cage externe 100 et la cage interne 120,
- un support 200, et
- un capteur 250 porté par le support 200.

Selon la représentation donnée sur les figures annexées, les corps de roulement 150 sont des billes. L'invention n'est cependant pas limitée à cette réalisation particulière. Les corps de roulement peuvent être formés de toute structure connue de l'homme de l'art. Il peut s'agir par exemple de corps cylindriques à section constante ou de corps tronconiques disposés sur une ou plusieurs rangées.

La géométrie des cages 100, 120 représentées sur les figures annexées n'est bien entendu pas limitative et peut faire l'objet de nombreuses variantes.

Il est généralement prévu un fluide de lubrification, le plus souvent de la graisse, dans l'espace 140 entre la cage externe 100 et la cage interne 120, contenant les corps de roulement 150. Cet espace 140 doit donc être fermé et étanchéifié par des structures de joint placées entre la cage externe 100 et la cage interne 120, de part et d'autre du corps de roulement 150.

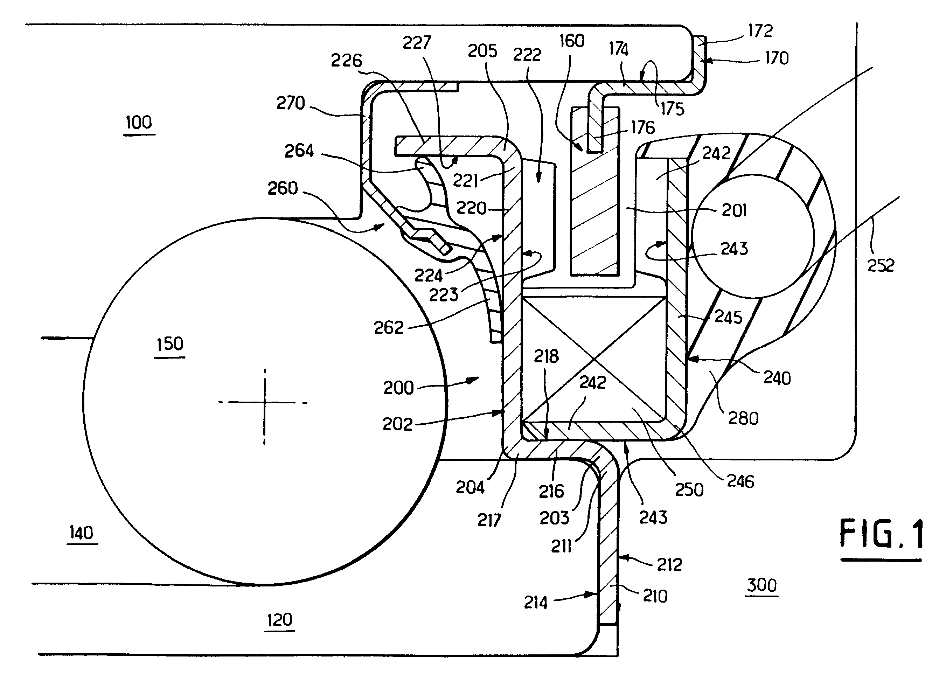

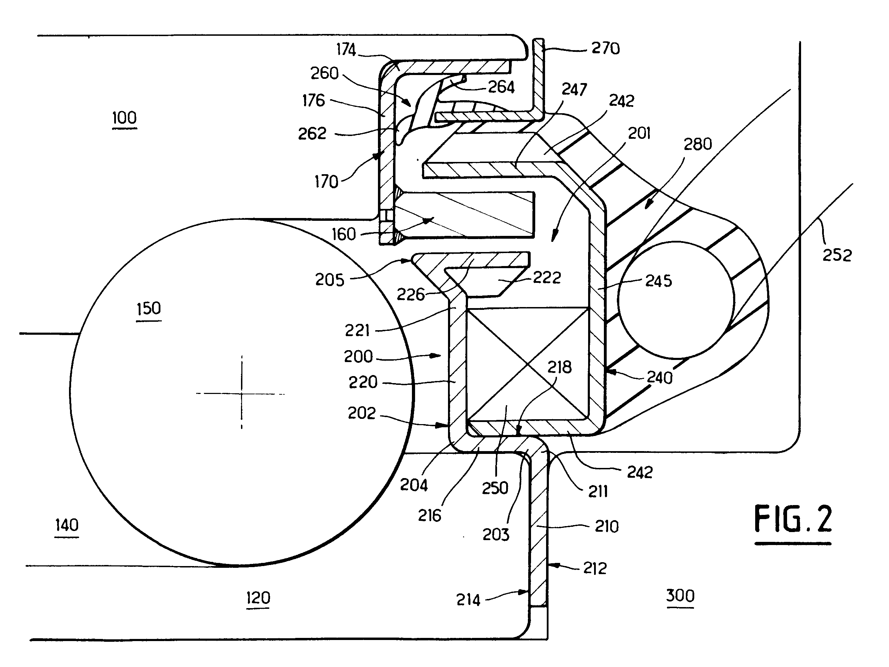

Selon les deux modes de réalisation représentés sur les figures 1 et 2 annexées, la cage fixe du roulement est la cage interne 120.

On a par ailleurs représenté sous la référence 300 sur les figures 1 et 2 annexées, une pièce de chassis destinée à recevoir la cage fixe 120.

Comme indiqué précédemment, selon la présente invention, le support 200 comprend une bague 210 destinée à être pincée entre la cage fixe 120 et le chassis 300.

Par ailleurs, selon une caractéristique essentielle de la présente invention, la bague 210 présente un coefficient de frottement plus élevé sur sa face 212 dirigée vers le chassis 300, que sur sa face 214 dirigée vers la cage fixe 120 du roulement.

Ce différentiel de coefficient de frottement autorise une rotation exceptionnelle de la bague fixe 120 du roulement par rapport au chassis 300, sans que pour autant le support 200 et le capteur 250 associé ne se déplacent de leur position angulaire initiale. En d'autres termes, la structure conforme à la présente invention autorise le phénomène dit de reptation. L'homme de l'art sait en effet qu'il arrive fréquemment que la bague supposée fixe d'un roulement se déplace néanmoins à rotation par rapport au chassis fixe en raison du couple appliqué sur cette bague par les corps de roulement. Grâce à la présente invention, la bague 120 peut ainsi se déplacer à rotation par rapport au chassis sans pour autant détériorer le capteur 250 ni perturber le fonctionnement de celui-ci par arrachement des fils.

Le différentiel de coefficient de frottement entre les deux surfaces 212, 214 de la bague 210 peut être obtenu selon toute technique connue de l'homme de l'art.

Le différentiel de coefficient de frottement peut être obtenu par traitement de surfaces de la surface 214 dirigée vers la bague fixe 120 du roulement, par exemple par dépôt d'une couche de matériau lisse sur cette surface 214, l'autre restant à l'état brut de fabrication.

Le différentiel de coefficient de frottement peut également être obtenu par traitement de surfaces de la surface 212 dirigée vers le chassis 300. Le traitement de surfaces de la surface 212 destiné à augmenter le coefficient de frottement de celle-ci peut être par exemple une oxydation, un sablage, un marquage, le dépôt d'un adhésif ou toute attaque chimique appropriée.

Le capteur 250 utilisé dans le cadre de la présente invention peut faire l'objet de toute variante connue de l'homme de l'art. D'une façon générale, il s'agira d'un transducteur 250 porté par le support 200 et conçu pour détecter le passage d'un élément 160 prévu sur la cage mobile 100 du roulement.

Il peut s'agir par exemple d'un capteur optique, ou d'une sonde à effet Hall portée par le support 200 en regard d'une roue polaire solidaire de la cage mobile 100.

Toutefois, selon la présente invention, le capteur 250 est formé de préférence d'un bobinage formé sur le support 200 pour être lié à la cage fixe 120 et conçu pour détecter la variation du flux engendré par les poles d'un aimant annulaire multipolaire 160 lié à la cage mobile 100.

Dans ce cas, le support 200 est formé en un matériau apte à conduire le flux magnétique. Il s'agit de préférence de fer doux.

Comme représenté sur les figures 1 et 2, le support 200 comprend alors plus précisément deux carcasses 202, 240 définissant un logement 201 dans lequel est placé le bobinage 250.

On va maintenant décrire plus précisément la structure des carcasses 202, 240 représentées sur la figure 1 annexée. Ce mode de réalisation de la figure 1 est destiné à une détection axiale.

La carcasse 202 représentée sur la figure 1 comprend essentiellement une tole présentant trois pliages 203, 204, 205, délimitant quatre parties successives 210, 216, 220 et 226, dont la bague 210 précitée.

La bague 210 est généralement plane et s'étend perpendiculairement à l'axe de rotation du roulement.

Cette bague 210 se prolonge, au niveau de sa périphérie radialement externe 211, par la seconde partie 216 précitée. Celle-ci est cylindrique de révolution autour de l'axe de rotation du roulement. Elle s'étend vers l'intérieur du roulement par rapport à la bague 210. La première partie 210 et la deuxième partie 216 sont reliées par la zone de pliage 203 sensiblement à 90°.

La partie cylindrique 216 se prolonge elle-même au niveau de son extrémité axialement interne 217 par la troisième partie 220. Celle-ci est généralement plane et formée d'une colerette qui s'étend perpendiculairement à l'axe de rotation du roulement. La seconde partie 216 et la troisième partie 220 sont reliées par la zone de pliage 204, sensiblement à 90°.

La troisième partie 220 se prolonge elle-même par la quatrième partie 226, au niveau de sa périphérie radialement externe 221. Cette quatrième partie 226 est cylindrique de révolution autour de l'axe de rotation du roulement. Elle s'étend vers l'intérieur du roulement par rapport à la troisième partie 220. La troisième partie 220 et la quatrième partie 226 sont reliées entre elles par la zone de pliage 205 sensiblement à 90°.

La seconde carcasse 240 est placée axialement sur l'exterieur de la première carcasse 202. La seconde carcasse 240 a la forme générale d'un L formé de deux ailes 242, 245. La première aile 242 est cylindrique de révolution autour de l'axe O-O. Le rayon de la surface périphérique 243 radialement interne de l'aile 242 est complémentaire du rayon de la surface périphérique 218 radialement externe de la seconde partie 216 de la première carcasse 202. Ainsi, la seconde carcasse 240 peut être maintenue sur la première carcasse 202 par engagement à force de l'aile 242 sur la partie cylindrique 216 de la première carcasse 202.

La seconde aile 245 de la seconde carcasse 240 est formée d'une colerette généralement plane qui s'étend perpendiculairement à l'axe de rotation du roulement. Les deux ailes 242, 245 sont reliées par une zone de pliage sensiblement à 90° référencée 246.

Ainsi, l'aile 245 s'étend parallèlement à la troisième partie 220 de la première carcasse 202, et radialement au regard de celle-ci.

Comme indiqué précédemment, le bobinage 250 est formé entre les deux carcasses 202, 240. Plus précisément il est formé sur l'aile 242 de la seconde carcasse 240, entre la troisième partie 220 de la première carcasse 202 et la seconde aile 245 de la seconde carcasse 240.

La troisième partie 220 de la première carcasse 202 et l'aile 245 de la seconde carcasse 240 s'étendent radialement à l'extérieur du bobinage 250. L'aimant annulaire 160 est formé d'une bague centrée sur l'axe de rotation du roulement et placé entre la troisième partie 220 de la première carcasse 202 et l'aile 245 de la seconde carcasse 240 radialement à l'extérieur du bobinage 250.

A ce niveau, la troisième partie 220 de la première carcasse 202 et l'aile 245 de la seconde carcasse 240 peuvent être munies de découpes périphériques équi-réparties autour de l'axe de rotation du roulement.

Toutefois, comme représenté schématiquement sur les figures annexées, on préfère remplacer ces découpes périphériques par des ondulations régulièrement réparties sur la périphérie de la troisième partie 220 de la première carcasse 202 et de l'aile 245 de la seconde carcasse 240. Ces ondulations sont représentées sous les références 222 et 242 sur les figures annexées. Ces ondulations sont plus précisément formées sur les surfaces 223 et 243 en regard de la troisième partie 220 de la première carcasse 202 et de l'aile 245 de la seconde carcasse 240. De telles ondulations 222, 242 sont préférées aux découpes périphériques dans la mesure où elles permettent d'obtenir un capteur plus rigide.

L'aimant 160 doit être centré entre les deux carcasses 202, 240. Il est maintenu sur la cage mobile 100 par tout moyen classique approprié. Selon la représentation donnée sur la figure 1 annexée, l'aimant annulaire 160 est fixé sur la cage externe mobile 100 du roulement par une tole pliée 170.

Plus précisément la tole 170 formant support pour l'aimant 160 comprend trois parties 172, 174, 176. La première partie 172 est formée d'une colerette généralement plane perpendiculaire à l'axe de rotation du roulement. Cette première partie 172 est plaquée contre la surface externe de la cage mobile 100. Elle se prolonge au niveau de sa périphérie radialement interne par la seconde partie 174. Celle-ci est cylindrique de révolution autour de l'axe de rotation du roulement. La surface externe 175 de cette seconde partie cylindrique 174 est complémentaire de la cage mobile 100 de sorte que le support 170 puisse être emmanché à force, par l'intermédiaire de la seconde partie 174 dans la cage externe mobile 100. La seconde partie 174 s'étend vers l'intérieur du roulement à partir de la première partie 172 précitée.

La seconde partie 174 se prolonge elle-même, au niveau de son extrémité axialement interne par la troisième partie 176. Celle-ci est formée d'une colerette généralement plane perpendiculaire à l'axe de rotation du roulement, dirigée vers cet axe par rapport à la seconde partie 174. La troisième partie 176 porte l'aimant 160.

L'aimant 160 représenté sur la figure 1 possède une aimantation axiale, c'est-à-dire que les poles nord et sud de l'aimant 160 sont orientés dans une direction parallèle à l'axe de rotation du roulement.

Sur les figures annexées, on a référencé 252 le cable contenant les fils de sortie du bobinage 250.

De préférence, il est prévu un joint 260 entre la cage externe mobile 100 et le support 200. Selon le mode de réalisation représenté sur la figure 1, il s'agit d'un joint à lèvres 260 porté par une tole 270 emmanché à force sur la cage externe mobile 100.

Plus précisément encore, selon la figure 1, le joint 260 comprend deux lèvres 262, 264 qui reposent respectivement sur la surface axialement interne 224 de la troisième partie 220 de la première carcasse 202 et sur la surface radialement interne 227 de la quatrième partie 226 de la première carcasse 202. On notera que ces surfaces 224, 227 qui servent de faces d'appui au joint 260, correspondent à la surface 214 de la bague 210 présentant le coefficient de frottement le plus faible. Ainsi, le joint à lèvres 260 repose sur des surfaces 224, 227 à faible coefficient de frottement. Cette caractéristique permet d'améliorer la durée de vie du joint d'étanchéité 260 et donc la longévité du roulement.

Bien entendu, la structure du joint 260 représenté sur les figures annexées n'est pas limitative. Le cas échéant, le joint 260 pourrait être un joint torique.

On comprendra aisément que l'aimant 160 et le support 200 comprenant le bobinage 250, représenté sur la figure 1, doivent être montés simultanément respectivement sur la cage externe mobile 100 et sur la cage interne fixe 120, compte-tenu de leur structure.

On va maintenant décrire le mode de réalisation représenté sur la figure 2.

On retrouve sur cette figure 2, un roulement comprenant une cage externe 100, une cage interne 120, des corps de roulement 150 placés entre les cages 100, 120, et un support 200 comprenant une bague 210 à différentiel des coefficients de frottement pincée entre la cage 120 et un élément de chassis 300.

Par ailleurs, de façon comparable au mode de réalisation représenté sur la figure 1, selon la figure 2 le support 200 comprend deux carcasses 202, 240 recevant un bobinage 250, et celui-ci est associé à un aimant 160 porté par la cage externe mobile 100. A la différence du mode de réalisation représenté sur la figure 1 qui correspond à une direction axiale, selon la figure 2, le capteur correspond à une détection radiale. C'est-à-dire que l'aimantation de l'aimant 160 est orienté radialement par rapport à l'axe de rotation du roulement.

L'aimant 160 est ainsi formé d'une pièce cylindrique centrée sur l'axe de rotation. L'aimant 160 est supporté par une pièce de tole support 170 comprenant deux branches 174, 176 pliées en L à 90° et emmanchées à force dans la cage externe de roulement 100.

Selon la figure 2, la première carcasse 202 comprend également quatre parties 210, 216, 220 et 226.

La première partie 210 correspond à la bague précitée destinée à être pincée entre la cage interne fixe 120 et le chassis 300.

Cette bague 210 se prolonge au niveau de sa périphérie radialement externe 211 par la seconde partie 216. Celle-ci est formée d'un cylindre centré sur l'axe de rotation du roulement. La seconde partie cylindrique 216 est conçue pour être engagée sur la cage interne fixe 120. La bague 210 et la seconde partie 216 sont reliées par une zone de pliage 203 sensiblement à 90°.

La seconde partie 216 s'étend vers l'intérieur du roulement par rapport à la bague 210.

La seconde partie 216 se prolonge elle-même, au niveau de son extrémité axialement interne par la troisième partie 220. Celle-ci est formée d'une colerette généralement plane qui s'étend perpendiculairement à l'axe de rotation du roulement. La troisième partie 220 s'étend radialement vers l'extérieur par rapport à la deuxième partie 216. La deuxième partie 216 et la troisième partie 220 sont reliées entre elles par une zone de pliage 204 sensiblement à 90°.

Enfin, la troisième partie 220 se prolonge, au niveau de sa périphérie radialement externe 221, par la quatrième partie 226. La troisième partie 220 et la quatrième partie 226 sont reliées par une zone de pliage 205. La quatrième partie 226 est formée d'un cylindre de révolution autour de l'axe de rotation du roulement. Toutefois, à la différence du mode de réalisation représenté sur la figure 1, selon la figure 2 la quatrième partie 226 s'étend vers l'extérieur du roulement par rapport à la troisième partie 220.

La seconde carcasse 240 comprend essentiellement trois branches 242, 245 et 247 en U. La branche 242, radialement interne, est formée d'un cylindre centré sur l'axe de rotation du roulement et emmanché à force sur la surface externe 218 de la seconde partie 216 de la première carcasse 202. Cette première branche 242 se prolonge au niveau de son extrémité axialement externe par la seconde branche 245. Celle-ci s'étend radialement vers l'extérieur par rapport à la première branche 242. La seconde branche 245 est formée d'une colerette généralement plane orthogonale à l'axe de rotation du roulement. La seconde branche 245 se prolonge elle-même, au niveau de sa périphérie radialement externe, par la troisième branche 247. Celle-ci est formée d'un cylindre centré sur l'axe de rotation du roulement. Elle s'étend axialement vers l'intérieur par rapport à la seconde branche 245 afin d'être placée en regard de la quatrième 226 de la première carcasse 220.

L'aimant 160 est placé entre la quatrième partie 226 de la première carcasse 202 et la troisième branche 247 de la seconde carcasse 240, à égale distance de celles-ci. La quatrième partie 226 de la première carcasse 202 et la troisième branche 247 de la seconde carcasse 240 peuvent être munies de découpes équi-réparties sur leur périphérie comme indiqué précédemment. Toutefois, de préférence, ces éléments sont munis d'ondulations 222, 242 comme décrit antérieurement.

Selon la figure 2, le joint 260 est porté par une tole 270 en L solidaire du support 200. Le joint 260 comprend deux lèvres 262, 264 qui reposent respectivement contre les ailes 174 et 176 du support 170 d'aimant. Bien entendu, on pourrait prévoir de rendre le joint 260 solidaire de la cage externe 100, les lèvres262, 264 reposant sur le support 200. On pourrait également envisager d'utiliser un joint torique à la place du joint à lèvres 260.

Pour protéger les fils de sortie du bobinage 250, on peut prévoir de surmouler une masse de matière thermoplastique référencée 280 sur les figures 1 et 2 sur le support 200, plus précisément sur la carcasse 240.

L'homme de l'art comprendra aisément que le mode de réalisation représenté sur la figure 2, à la différence du mode de réalisation représenté sur la figure 1, autorise le montage successivement de l'aimant 160 sur la cage externe 100, puis du support 200 sur la cage interne 120.

Bien entendu la présente invention n'est pas limitée aux modes de réalisation particuliers qui viennent d'être décrits mais s'étend à toutes variantes conformes aux revendications.

Ainsi par exemple la présente invention pourra aisément être adaptée à des roulements dans lesquels la cage fixe serait la cage externe 100, et non pas la cage interne 120.

Dans ce cas, en effet, il suffit de rendre l'aimant 160 solidaire de la cage interne 120 et de pincer la bague 210 du support 200 entre la cage externe fixe 100 et le chassis 300 associé.

Par ailleurs, selon le mode de réalisation représenté sur la figure 1, le capteur est un capteur à détection axiale tandis que selon la figure 2, le capteur est un capteur à détection radiale. On peut bien entendu prévoir un capteur à détection intermédiaire entre la détection axiale et la détection radiale ; c'est-à-dire que l'aimantation de l'aimant peut être placée dans une position intermédiaire entre une orientation axiale et une orientation radiale.

## Revendications

1. Roulement du type intégrant un capteur de vitesse comprenant de façon connue en soi, un support annulaire (200) de capteur, une cage externe (100), une cage interne (120) et des corps de roulement (150) répartis entre la cage externe (100) et la cage interne (120), l'une de ces cages (120) étant conçue pour être fixée sur un chassis (300), caractérisé par le fait que le support annulaire (200) de capteur comprend une bague (210) destinée à être pincée entre la cage fixe (120) et le chassis (300), la bague (210) présentant un coefficient de frottement plus élevé sur sa face (212) dirigée vers le chassis (300) que sur sa face (214) dirigée vers la cage fixe (120) de roulement.

2. Roulement selon la revendication 1, caractérisé par le fait que le différentiel de coefficient de frottement est obtenu par traitement de surfaces de la bague (210).

3. Roulement selon l'une des revendications 1 ou 2, caractérisé par le fait que le différentiel de coefficient de frottement est obtenu par dépôt d'un matériau lisse sur la surface (214) de la bague (210) dirigé vers la cage fixe (120) du roulement.

4. Roulement selon l'une des revendications 1 à 3, caractérisé par le fait que le différentiel de coefficient de frottement est obtenu par traitement de surfaces de la face (212) de la bague (210) dirigé vers le chassis (300), choisi dans le groupe comprenant une oxydation, un sablage, un marquage, le dépôt d'un adhésif, une attaque chimique, tout moyen équivalent.

5. Roulement selon l'une des revendications 1 à 4, caractérisé par le fait que la surface (214) du support présentant le coefficient de frottement le plus faible sert de face d'appui au joint d'étanchéité (260).

6. Roulement selon l'une des revendications 1 à 5, caractérisé par le fait que le support (200) comprend deux carcasses (202, 240) en matériau conduisant le flux magnétique et recevant un bobinage (250).

7. Roulement selon l'une des revendications 1 à 6, caractérisé par le fait qu'il comprend en outre un aimant annulaire (160) à aimantation radiale.

8. Roulement selon l'une des revendications 1 à 6, caractérisé par le fait qu'il comprend en outre un aimant annulaire (160) à aimantation axiale.

9. Roulement selon l'une des revendications 1 à 8, caractérisé par le fait que la cage fixe du roulement est la cage interne (120).

10. Roulement selon l'une des revendications 1 à 8, caractérisé par le fait que la cage fixe du roulement est la cage externe (100).

## Claims

1. Rolling-contact bearing of the type incorporating a speed sensor comprising, in a way known per se, an annular sensor support (200), an outer cage (100), an inner cage (120), and rolling bodies (150) distributed between the outer cage (100) and the inner cage (120), one of these cages (120) being designed to be fastened on to a chassis (300), characterized in that the annular sensor support (200) comprises a race (210) intended to be trapped between the stationary cage (120) and the chassis (300), the race (210) exhibiting a higher coefficient of friction on that one (212) of its faces which points towards the chassis (300) than on that one (214) of its faces pointing towards the stationary bearing cage (120).

2. Rolling-contact bearing according to Claim 1, characterized in that the differential in coefficient of friction is obtained by surface-treatment of the race (210).

3. Rolling-contact bearing according to one of Claims 1 and 2, characterized in that the differential in coefficient of friction is obtained by depositing a smooth material on that surface (214) of the race (210) which points towards the stationary cage (120) of the bearing.

4. Rolling-contact bearing according to one of Claims 1 to 3, characterized in that the differential in coefficient of friction is obtained by surface-treatment of that face (212) of the race (210) which points towards the chassis (300), the surface-treatment being chosen from the group comprising oxidation, sandblasting, marking, deposition of an adhesive, chemical attack, any equivalent means.

5. Rolling-contact bearing according to one of Claims 1 to 4, characterized in that the surface (214) of the support exhibiting the lower coefficient of friction serves as a face against which the seal (260) bears.

6. Rolling-contact bearing according to one of Claims 1 to 5, characterized in that the support (200) comprises two carcasses, (202, 240) made of a material which conducts magnetic flux and receiving a winding (250).

7. Rolling-contact bearing according to one of Claims 1 to 6, characterized in that it further comprises an annular magnet (160) with radial magnetization.

8. Rolling-contact bearing according to one of Claims 1 to 6, characterized in that it further comprises an annular magnet (160) with axial magnetization.

9. Rolling-contact bearing according to one of Claims 1 to 8, characterized in that the stationary cage of the bearing is the inner cage (120).

10. Rolling-contact bearing according to one of Claims 1 to 8, characterized in that the stationary cage of the bearing is the outer cage (100).

## Patentansprüche

1. Wälzlager der Bauart mit eingebautem Geschwindigkeitsaufnehmer, welches in an sich bekannter Weise einen ringförmigen Träger (200) für den Aufnehmer, einen Außenring (100), einen Innenring (120) und zwischen dem Außenring (100) und dem Innenring (120) verteilte Wälzkörper (150) aufweist, wobei einer dieser Ringe (120) dazu bestimmt ist, auf einem Rahmen (300) fixiert zu werden, dadurch gekennzeichnet, daß der ringförmige Träger (200) des Aufnehmers einen Ring (210) aufweist, der dazu bestimmt ist, zwischen dem feststehenden Ring (120) und dem Rahmen (300) festgeklemmt zu werden, wobei der Ring (210) auf seiner dem Rahmen (300) zugewandten Seite (212) einen größeren Reibkoeffizienten als auf seiner dem feststehenden Ring (120) des Wälzlagers zugewandten Seite (214) besitzt.

2. Wälzlager nach Anspruch 1, dadurch gekennzeichnet, daß der Unterschied des Reibkoeffizienten durch Behandlung der Oberflächen des Rings (210) erzielt ist.

3. Wälzlager nach Anspruch 1 oder 2, dadurch gekennzeichnet, daß der Unterschied des Reibkoeffizienten durch Anlagerung eines glatten Materials auf der dem feststehenden Ring (120) des Wälzlagers zugewandten Oberfläche (214) des Rings (210) erzielt ist.

4. Wälzlager nach einem der Ansprüche 1 bis 3, dadurch gekennzeichnet, daß der Unterschied des Reibkoeffizienten durch Oberflächenbehandlung der dem Rahmen (300) zugewandten Seite (212) des Rings (210) erzielt ist, wobei die Behandlung Oxidation, Sandstrahlen, Markieren, Anlagern eines Haftmittels, ein chemischer Angriff oder jedes äquivalente Mittel sein kann.

5. Wälzlager nach einem der Ansprüche 1 bis 4, dadurch gekennzeichnet, daß die den geringeren Reibkoeffizienten aufweisende Oberfläche (214) des Trägers als Andruckfläche für die Dichtung (260) dient.

6. Wälzlager nach einem der Ansprüche 1 bis 5, dadurch gekennzeichnet, daß der Träger (200) zwei Polgehäuse (202, 240) aufweist, die aus einem den magnetischen Fluß leitenden Material bestehen und eine Spule (250) aufnehmen.

7. Wälzlager nach einem der Ansprüche 1 bis 6, dadurch gekennzeichnet, daß es außerdem einen ringförmigen Magneten (160) mit radialer Magnetisierung aufweist.

8. Wälzlager nach einem der Ansprüche 1 bis 6, dadurch gekennzeichnet, daß es außerdem einen ringförmigen Magneten (160) mit axialer Magnetisierung aufweist.

9. Wälzlager nach einem der Ansprüche 1 bis 8, dadurch gekennzeichnet, daß der feststehende Ring des Wälzlagers der Innenring (120) ist.

10. Wälzlager nach einem der Ansprüche 1 bis 8, dadurch gekennzeichnet, daß der feststehende Ring des Wälzlagers der Außenring (100) ist.
